# FASCICULE DE BREVET EUROPEEN

(11) **EP 4 449 004 B1**
(45) Date de publication et mention de la délivrance du brevet: **03.09.2025**
(21) Numéro de dépôt: 22844670.4
(22) Date de dépôt: 12.12.2022
(51) Int. Cl.: F16L 58/10, B29C 55/30, B29C 63/34, F16L 57/02

(54) **CONDUITE POUR LE TRANSPORT DE FLUIDES À TUBE EN ACIER AVEC CHEMISAGE DE PROTECTION MUNI DE FENTES POUR L'ÉVACUATION DU GAZ ACCUMULÉ SOUS LE CHEMISAGE**
FLÜSSIGKEITSTRANSPORTROHR MIT EINEM STAHLROHR MIT EINER SCHUTZAUSKLEIDUNG MIT SCHLITZEN ZUR ABFÜHRUNG VON UNTER DER AUSKLEIDUNG AUFGEBAUTEM GAS
FLUID TRANSPORT PIPE HAVING A STEEL TUBE WITH A PROTECTIVE LINING PROVIDED WITH SLOTS FOR DISCHARGING GAS BUILT UP UNDER THE LINING

(30) Priorité: 17.12.2021 FR 2113893
(43) Date de publication de la demande: 23.10.2024
(73) Titulaire: SAIPEM S.A., 92800 Puteaux (FR)
(72) Inventeur: DELAPLACE, Thomas, 92110 CLICHY (FR); HALLOT, Raymond, 78960 VOISINS LE BRETONNEUX (FR); LE GUENNEC, Olivier, 78610 AUFFARGIS (FR); SINGLING, Nicolas, 94300 VINCENNES (FR)
(74) Mandataire: Cabinet Beau de Loménie
(86) Numéro de dépôt international: PCT/FR2022/052317
(87) Numéro de publication internationale: WO 2023/111437

(56) Documents cités:
- WO-A1-2021/084236
- CN-A- 112 477 106
- US-A- 5 072 622
- US-A1- 2018 051 841

## Description

### Domaine Technique

La présente invention se rapporte au domaine général des conduites sous-marines ou terrestres en acier et revêtues qui sont utilisées pour le transport de fluides tels que des hydrocarbures, notamment le pétrole et le gaz, ou l'hydrogène ou le CO2.

Elle concerne plus précisément une solution pour éviter le flambement du chemisage interne de telles conduites sous le revêtement lors d'une dépressurisation brutale de la ligne en raison de la perméation et de l'accumulation de gaz.

### Technique antérieure

Les conduites sous-marines utilisées pour le transport d'hydrocarbures, notamment de pétrole et de gaz, issus de puits de production sous-marins sont généralement constituées par un tube en acier.

Les fluides transportés sont parfois corrosifs pour l'acier constitutif des tubes en raison d'un ou plusieurs constituants tels que le dioxyde de carbone ou le sulfure d'hydrogène. Aussi, pour les protéger contre la corrosion, il est connu d'insérer ou d'appliquer à l'intérieur de la conduite en acier une couche d'acier allié à base nickel résistant à la corrosion - ayant typiquement une épaisseur de l'ordre de 3mm ou plus. La couche d'acier allié résistant à la corrosion va protéger l'intégrité mécanique de la conduite en acier en l'isolant du fluide transporté et en la préservant de la corrosion induite. Cette couche d'acier allié peut être inséré sous forme de chemise ou appliquée par dépôt de matière sur la surface interne de la conduite en acier - (cette technique est dite de « CRA lining » pour « Corrosion Resistance Alloy lining » dans l'industrie). Cette solution efficace est cependant très coûteuse.

Une première alternative au chemisage en acier allié est l'application d'une couche de protection anti-corrosion sous forme de revêtement fin, réalisé par exemple avec application de résine de polymères époxyde, plus communément appelés « epoxys », ayant typiquement une épaisseur de l'ordre de quelques centaines de micromètres. Bien que plus économique à l'achat et à la fabrication que l'utilisation d'un chemisage en acier allié, ces revêtements fins présentent l'inconvénient d'être sensibles aux rayures et à l'abrasion, pouvant résultant en la mise à nu de certaines parties de la conduite acier, l'exposant ainsi au risque de corrosion. Des produits chimiques anti-corrosion sont usuellement injectés de manière préventive dans le fluide transporté pour réduire les risques de corrosion dans les zones éventuellement mises à nu de la conduite en acier, ceci augmentant les coûts opérationnels d'utilisation de la conduite.

En autre alternative, cette solution peut être remplacée par l'insertion d'un chemisage annulaire de protection - ayant typiquement une épaisseur de l'ordre de 10mm - réalisé en matériau polymère, par exemple en matériau thermoplastique. Le chemisage de protection est typiquement inséré par traction à travers un système de réduction de diamètre puis à l'intérieur du tube en acier pour venir se plaquer contre la surface interne du tube une fois la force de traction relâchée afin d'obtenir un ajustement serré. Le chemisage de protection isole alors la conduite en acier du fluide transporté et la protège des risques de corrosion induite. L'épaisseur de la chemise en polymère la protège des risques de rayures et d'abrasion durant la vie de la conduite. Cette technique est assez couramment utilisée pour des conduites de transport de liquides comme de l'eau d'injection par exemple mais moins répandue pour des lignes de transports de fluides de production multiphasiques.

Bien que plus économique que la technique usuelle dite de « CRA lining», le chemisage en matériau polymère présente l'inconvénient d'être perméable aux gaz et vapeurs provenant des fluides transportés. Aussi, en pratique, du gaz a tendance à pénétrer dans le matériau polymère et à passer au travers du chemisage de protection pour venir se loger dans l'espace interstitiel entre le chemisage et la paroi interne du tube en acier.

Au cours du temps, les gaz et vapeurs sont s'accumuler dans l'espace interstitiel, le phénomène de perméation étant piloté par la pression de service du fluide transporté, et créer ainsi avec le temps, les phénomènes de perméation n'étant usuellement pas immédiats, une accumulation de gaz sous pression sous le chemisage, plus ou moins uniformément distribuée sur la longueur de la conduite. Or, lorsque la conduite va être dépressurisée, le taux de perméation du chemisage de protection n'est pas suffisamment élevé pour permettre de faire diminuer la pression à l'intérieur de l'espace interstitiel à la même vitesse que la baisse de pression à l'intérieur de la conduite. Un différentiel de pression se créé alors avec une mise en surpression du côté de l'espace interstitiel, avec un risque d'apparition d'un flambement ou effondrement local du chemisage de protection.

L'effondrement local et incontrôlé du chemisage de protection au cours de la dépressurisation de la conduite peut avoir comme conséquence de compromettre l'intégrité du chemisage de protection et donc son efficacité comme protection contre la corrosion de l'acier constituant le tube. De plus, lorsque la conduite est remise en pression, il existe un risque que la partie du chemisage de protection qui s'est effondrée ne puisse pas revenir dans sa forme initiale contre la paroi interne du tube, pouvant modifier ainsi localement la section de passage pour le fluide transporté ce qui peut mener à des augmentations de pertes de charge par exemple ou à une modification de la capacité de résistance dans le temps du chemisage en polymères.

Plusieurs solutions ont été envisagées pour résoudre ce problème d'effondrement incontrôlé du chemisage de protection lors de la dépressurisation de la conduite. Certaines prévoient d'appliquer un revêtement adhésif sur la surface interne du tube en acier pour augmenter l'adhésion entre le chemisage thermoplastique et la conduite en acier, augmentant ainsi la résistance à l'effondrement dudit chemisage tout en limitant le volume de l'espace interstitiel sous le liner et donc la quantité de gaz pouvant s'y accumuler éventuellement. D'autres solutions connues consistent à former des rainures sur la face externe du chemisage de façon à collecter les gaz ayant traversé le chemisage et à les évacuer vers l'extérieur de la conduite par l'intermédiaire d'orifices externes pratiqués dans le tube. Cette opération de dégazage peut être réalisée en continue ou à intervalles réguliers.

Encore une autre solution consiste à pratiquer des perforations cylindriques dans le chemisage de protection de façon à mettre en contact l'espace interstitiel avec l'intérieur du chemisage. En cas de dépressurisation de la conduite, les gaz ayant traversé le chemisage vont emprunter ces perforations pour être évacués par l'intérieur du chemisage de façon à garder le différentiel de pression sous la pression d'effondrement du chemisage.

Toutes les solutions de l'art antérieur présentées ci-dessus présentent des inconvénients. En particulier, le recours à un revêtement adhésif sur la surface interne du tube en acier présente l'inconvénient d'une importante complexité de processus de mise en œuvre qui nécessite plusieurs phases d'application de différentes couches suivies de phases de cuisson pour créer l'adhésion. En outre, l'utilisation d'orifices externes d'évacuation des gaz nécessite de percer le tube en acier, ce qui affaiblit l'intégrité mécanique du tube, et de prévoir une ligne d'évacuation des gaz dans l'environnement sous-marin, ce qui augmente la complexité du système, les procédures d'installation et les risques de fuites. De plus, cette solution requiert des opérations de maintenance pour activer l'opération de dégazage. Les rainures pratiquées sur la surface externe de la chemise sont également sujettes au bouchage et à l'accumulation de liquide pouvant réduire l'efficacité de la ventilation.

La solution consistant à pratiquer des perforations cylindriques dans le chemisage de protection présente l'inconvénient de mettre continuellement en contact les fluides transportés avec le tube en acier, avec le risque d'engendrer localement de la corrosion. De plus, au cours de leur durée de vie, ces perforations cylindriques sont sujettes à l'obturation, car elles peuvent facilement être remplies de sable, de cire d'hydrocarbures, voire même être le siège de prolifération de bactéries. US 5 072 622 A décrit une conduite pour le transport de fluides selon le préambule de la revendication 1.

### Exposé de l'invention

La présente invention a pour but de proposer une conduite pour le transport de fluides permettant de limiter, voire d'éviter, l'effondrement d'un chemisage de protection lors d'une dépressurisation de la conduite qui ne présente pas les inconvénients précités.

Ce but est atteint grâce à une conduite pour le transport de fluides comprenant un tube en acier destiné à recevoir un écoulement de fluides à transporter, et un chemisage annulaire de protection contre la corrosion et/ou l'abrasion réalisé en matériau polymère, de préférence un matériau thermoplastique et inséré à l'intérieur du tube, et dans laquelle, conformément à l'invention, le chemisage comprend une pluralité de fentes qui s'étendent dans le sens de leur longueur parallèlement à un axe longitudinal du tube et qui sont traversantes entre une face interne et une face externe du chemisage, chaque fente étant ouverte du côté de la face interne du chemisage préalablement à l'insertion du chemisage dans le tube, et au moins partiellement fermée entre la face interne et la face externe du chemisage le long de sa profondeur une fois le chemisage inséré dans le tube.

L'invention repose sur le concept de fentes qui permettent au gaz qui s'est infiltré dans l'espace annulaire entre le tube et le chemisage d'être évacué dans le tube lorsqu'une dépressurisation de la ligne se produit. En particulier, la forme spécifique des fentes et leur disposition parallèlement à l'axe longitudinal du tube permettent de minimiser le risque de pénétration de saletés/solides dans les fentes, tout en autorisant leur ouverture rapide et efficace pour évacuer le gaz accumulé dans l'espace annulaire lorsqu'une dépressurisation se produit.

En effet, grâce à cette conception, l'ouverture du côté de la face interne du chemisage est réduite au minimum, ce qui permet d'éviter la pénétration de saletés, de cires ou d'autres matériaux de bouchage potentiels. De plus, en cas de dépressurisation de la conduite, la forme des fentes est favorable à l'ouverture du côté de l'intérieur du tube car le gaz qui s'est accumulé dans l'espace annulaire appliquera, lorsqu'il empruntera les fentes, une pression sur les bords latéraux de celles-ci. Plus la différence de pression entre l'espace annulaire et l'intérieur du tube sera élevée, plus l'élargissement des fentes du côté de l'intérieur du tube sera important. Ainsi, le gaz sera facilement évacué vers l'intérieur du tube lors de la dépressurisation de la conduite. Comme l'évacuation du gaz accumulé sous la chemise vers la conduite va faire baisser le différentiel de pression entre l'espace interstitiel et la conduite, les fentes se refermeront dès que la différence de pression redeviendra suffisamment faible. Ces fentes fonctionnent ainsi comme des clapets anti-retour pour l'évacuation vers la conduite du gaz accumulé sous le chemisage.

En outre, la conception des fentes selon l'invention permet de traiter les dépôts potentiels de solides au niveau des fentes du côté interne. En effet, plus la différence de pression entre l'espace annulaire et l'intérieur du tube est grande, plus l'ouverture des fentes est importante en raison de la pression supplémentaire du gaz accumulé dans l'espace annulaire. S'il y a une couche de dépôt de matière solide sur une fente du côté interne, celle-ci va localement bloquer temporairement ou réduire l'évacuation du gaz de perméation vers l'intérieur du tube, ce qui va augmenter davantage le différentiel de pression. L'ouverture du côté de la face interne du chemisage va alors augmenter, fissurant ainsi la couche de dépôt et permettant au gaz de s'évacuer. L'évacuation du gaz va entraîner le dépôt en même temps que le gaz, nettoyant ainsi la surface interne du chemisage dans la zone de la fente.

Dans le cas improbable d'un blocage local supplémentaire d'une fente, le comportement du chemisage lui-même, combiné à la conception de la fente, débloquera la situation. En effet, même si le gaz ne pourra pas localement s'échapper de l'espace annulaire et qu'il n'est pas en mesure de rejoindre d'autres fentes, le chemisage commencera à se déformer localement et le changement de forme du chemisage favorisera rapidement l'ouverture des fentes et la fissuration de la surface du dépôt, permettant finalement au gaz de perméation de s'échapper.

Par ailleurs, les fentes sont orientées dans la même direction que le tube, et donc que le chemisage en matériau polymère. Cela permet de minimiser l'impact sur la résistance mécanique du chemisage pendant le processus son insertion dans le tube et pendant les opérations d'installation et de durée de vie de la conduite.

De plus, la variation de l'état de contrainte dans le chemisage due au gonflement par absorption d'une partie du fluide transporté, à la pression ou à la compression ou tension axiale liée aux variations thermiques ou à la géométrie in-situ de la conduite ne nuit pas à l'efficacité des fentes selon l'invention.

De préférence, chaque fente présente, en coupe transversale et préalablement à l'insertion du chemisage dans le tube, une ouverture externe au niveau de la face externe du chemisage qui communique par l'intermédiaire d'une gorge avec une ouverture interne au niveau de la face interne du chemisage.

Dans un premier mode de réalisation, chaque fente présente, en coupe transversale et préalablement à l'insertion du chemisage dans le tube, une forme de rectangle avec une ouverture externe ayant la même largeur que l'ouverture interne.

Dans un deuxième mode de réalisation, chaque fente présente, en coupe transversale et préalablement à l'insertion du chemisage dans le tube, une forme de trapèze avec une ouverture externe de plus grande largeur que l'ouverture interne.

Dans un troisième mode de réalisation, chaque fente présente, en coupe transversale et préalablement à l'insertion du chemisage dans le tube, une ouverture externe et une ouverture interne de forme rectangulaire avec l'ouverture externe de plus grande largeur que l'ouverture interne, et une gorge ayant une forme de trapèze isocèle.

Dans ce troisième mode de réalisation, les ouvertures externe et interne de chaque fente peuvent être alignées selon la médiatrice de la gorge, les deux côtés non parallèles de la gorge formant, en coupe transversale, un angle compris entre 20° et 45° avec la médiatrice.

De même, préalablement à l'insertion du chemisage dans le tube, l'ouverture externe de chaque fente peut mesurer entre 1 et 10mm et l'ouverture interne de chaque fente peut mesurer entre 0,2 et 4mm

Dans un quatrième mode de réalisation chaque fente présente, en coupe transversale et préalablement à l'insertion du chemisage dans le tube, une ouverture externe et une ouverture interne de forme rectangulaire avec l'ouverture externe de plus grande largeur que l'ouverture interne, et une gorge ayant une forme de U.

Dans le troisième et quatrième mode de réalisation, en coupe transversale et préalablement à l'insertion du chemisage dans le tube, l'ouverture interne de chaque fente peut déboucher au niveau de la face interne du chemisage par une forme évasée.

Quel que soit le mode de réalisation, les fentes peuvent être alignées le long d'une pluralité d'axes parallèles à l'axe longitudinal du tube. Alternativement, les fentes peuvent être alignées le long d'une pluralité d'hélices centrées sur l'axe longitudinal du tube.

Le chemisage peut comprendre en outre une pluralité de canaux communiquant chacun avec au moins une fente, les canaux étant débouchant du côté de la face externe du chemisage et non débouchant du côté de la face interne du chemisage. Ces canaux permettent ainsi d'assurer un drainage du gaz de perméation vers les fentes.

La conduite peut comprendre en outre un revêtement anti-corrosion appliqué sur une face interne du tube préalablement à l'insertion de la chemise.

### Brève description des dessins

[Fig. 1] La figure 1 est une vue en perspective d'une conduite pour le transport de fluides selon un premier mode de réalisation de l'invention.
[Fig. 2] La figure 2 est une vue en coupe transversale d'une fente du chemisage de la conduite de la figure 1 préalablement à son insertion dans le tube.
[Fig. 3] La figure 3 est une vue en coupe transversale de la fente de la figure 2 après insertion du chemisage dans le tube.
[Fig. 4] La figure 4 est une vue en coupe transversale d'une fente du chemisage d'une conduite selon un deuxième mode de réalisation de l'invention préalablement à l'insertion du chemisage dans le tube.
[Fig. 5] La figure 5 est une vue en coupe transversale de la fente de la figure 4 après insertion du chemisage dans le tube.
[Fig. 6A-6B] Les figures 6A-6B sont des vues respectivement en perspective et en coupe transversale d'une fente du chemisage d'une conduite selon un troisième mode de réalisation de l'invention préalablement à l'insertion du chemisage dans le tube.
[Fig. 7] La figure 7 est une vue en coupe transversale de la fente des figures 6A et 6B après insertion du chemisage dans le tube.
[Fig. 8A-8B] Les figures 8A-8B sont des vues respectivement en perspective et en coupe transversale d'une fente du chemisage d'une conduite selon une variante du troisième mode de réalisation de l'invention préalablement à l'insertion du chemisage dans le tube.
[Fig. 9] La figure 9 est une vue en coupe transversale de la fente des figures 8A et 8B après insertion du chemisage dans le tube.
[Fig. 10A-10B] Les figures 10A-10B sont des vues respectivement en perspective et en coupe transversale d'une fente du chemisage d'une conduite selon un quatrième mode de réalisation de l'invention préalablement à l'insertion du chemisage dans le tube.
[Fig. 11] La figure 11 est une vue en coupe transversale de la fente des figures 10A et 10B après insertion du chemisage dans le tube.
[Fig. 12] La figure 12 est une vue en perspective montrant une variante de répartition des fentes sur le chemisage de la conduite selon l'invention.
[Fig. 13] La figure 13 est une vue en perspective d'une conduite selon une variante de réalisation de l'invention qui est munie d'un revêtement anti-corrosion appliqué sur la face interne du tube.

### Description des modes de réalisation

L'invention concerne tout type de conduite de transport de fluides, notamment d'hydrocarbures mais également d'hydrogène ou de CO2, comprenant un tube en acier à l'intérieur duquel s'écoule les fluides à transporter, et un chemisage annulaire de protection contre la corrosion et/ou l'abrasion qui est réalisé en matériau polymère et inséré à l'intérieur du tube contre une surface interne de celui-ci.

L'invention trouve une application privilégiée (mais non limitative) au transport sous-marin d'hydrocarbures, en particulier de pétrole et de gaz, issus de puits de production sous-marins.

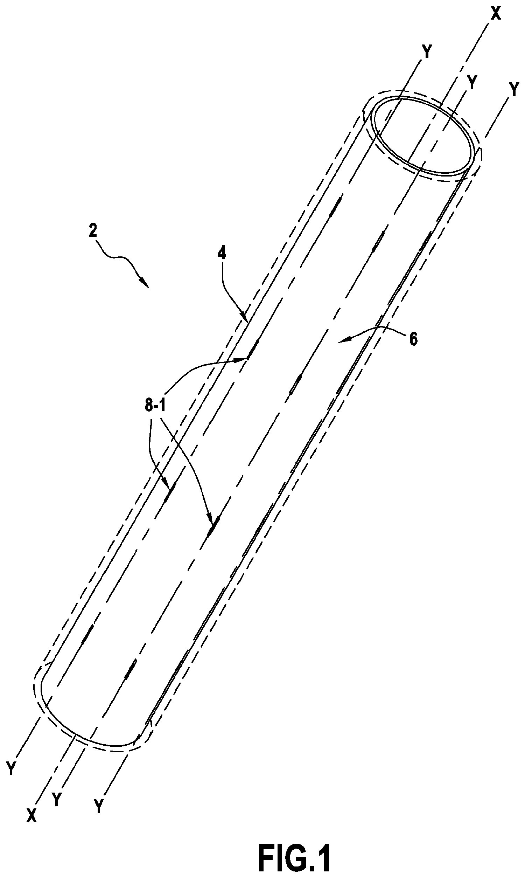

La figure 1 est une vue en perspective d'une conduite 2 pour le transport de fluides selon un premier mode de réalisation de l'invention.

La conduite 2 comprend un tube en acier 4, par exemple en acier au carbone, ayant un axe longitudinal X-X et qui est destiné à recevoir l'écoulement de fluides à transporter. La conduite comprend également un chemisage annulaire de protection 6 qui est réalisé en matériau polymère, inséré à l'intérieur du tube 4 contre une surface interne de celui-ci et destiné à assurer une protection de l'acier contre la corrosion des fluides et/ou l'abrasion.

A titre d'exemple non limitatif, le chemisage peut être réalisé par extrusion d'une matière thermoplastique telle que : polyéthylène à haute densité (HDPE), polyamide (PA), fluorure de polyvinylidène ou difluorure de polyvinylidène (PVDF), polyetheretherketone (PEEK), etc.

De façon connue en soi, le chemisage peut être inséré par déformation à l'intérieur du tube selon un ajustement serré. Dans ce cas, le chemisage présente, au repos (c'est-à-dire préalablement à son insertion dans le tube), un diamètre externe qui est légèrement supérieur au diamètre interne du tube. De la sorte, l'insertion du chemisage dans le tube génère une pression de contact entre le chemisage et le tube. Une fois inséré à l'intérieur du tube, les diamètres interne et externe du chemisage se retrouvent donc rétrécis par rapport au chemisage à son état au repos.

Selon l'invention, le chemisage 6 comprend une pluralité de fentes 8-1 qui s'étendent dans le sens de leur longueur parallèlement à l'axe longitudinal X-X du tube 4. Par « fente », on entend ici une ouverture étroite et allongée.

Par ailleurs, ces fentes 8-1 sont traversantes entre une face interne 6a et une face externe 6b du chemisage 6, c'est-à-dire qu'elles sont aptes à mettre en communication ces faces 6a, 6b entre elles.

Plus précisément, chaque fente 8-1 est ouverte du côté de la face interne 6a du chemisage lorsque le chemisage 6 est au repos, c'est-à-dire préalablement à son insertion dans le tube 4, et au moins partiellement fermée entre la face interne et la face externe du chemisage le long de sa profondeur (ou épaisseur) une fois le chemisage inséré dans le tube.

Dans le premier mode de réalisation de l'invention, les fentes sont plus précisément fermées au moins partiellement du côté de la face interne 6a du chemisage lorsque celui-ci est inséré dans le tube et cette fermeture peut résulter de deux facteurs indépendants. En particulier, si le chemisage est dimensionné pour être inséré par déformation à l'intérieur du tube selon un ajustement serré, une fois inséré à l'intérieur du tube, ses diamètres interne et externe se retrouvent nécessairement rétrécis par rapport à son état au repos. Il en résulte une fermeture de la fente des deux côtés, avec une fermeture plus prononcée du côté interne (qui subit une réduction de diamètre plus importante). L'autre facteur de fermeture des fentes tient dans le fait que la matière polymère du chemisage qui baigne dans les fluides transportés est typiquement soumise en service à un gonflement par les hydrocarbures, menant naturellement à la fermeture des fentes, plus prononcée du côté interne.

On notera que les fentes peuvent être réalisées après la phase d'extrusion du chemisage en matériau polymère par le fabricant, mais doivent être réalisées avant l'insertion du chemisage dans le tube. Elles peuvent être réalisées sur des joints de tubes plastiques individuels tels que disponible en sortie d'usine ou sur des longueurs plus importantes faite d'un assemblage longitudinal de joints individuels, en fonction du procédé de fabrication choisi et de sa mise en œuvre.

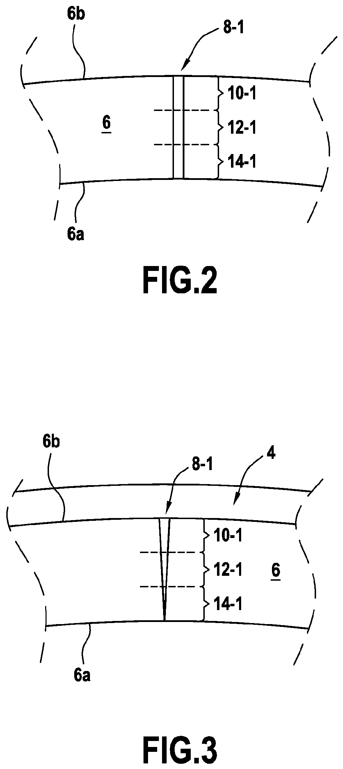

Plus précisément, comme représenté sur la figure 2, chaque fente 8-1 présente, en coupe transversale et préalablement à l'insertion du chemisage dans le tube, une ouverture externe 10-1 au niveau de la face externe 6b du chemisage qui communique par l'intermédiaire d'une gorge 12-1 avec une ouverture interne 14-1 au niveau de la face interne 6a du chemisage.

Dans le premier mode de réalisation représenté par les figures 1 à 3, chaque fente présente, en coupe transversale et préalablement à l'insertion du chemisage dans le tube, une forme de rectangle avec une ouverture externe 10-1, une gorge 12-1 et ouverture interne 14-1 qui ont la même largeur (voir la figure 2).

Une fois le chemisage inséré à l'intérieur du tube 4 (figure 3), les diamètres interne et externe du chemisage se retrouvent réduits, provoquant une fermeture au moins partielle - voire totale - du côté de la face interne 6a du chemisage.

Ce premier mode de réalisation est avantageux de par la simplicité de géométrie et de fabrication des fentes.

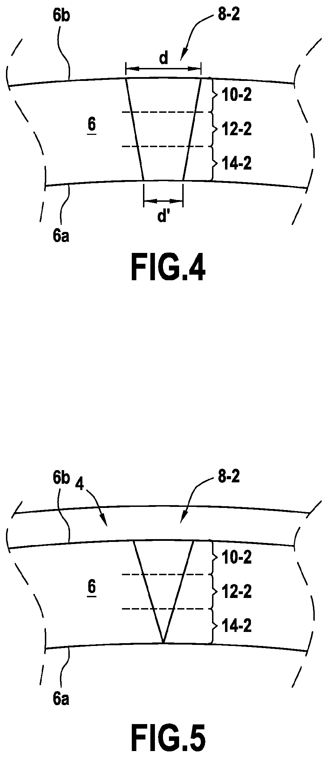

Dans le deuxième mode de réalisation représenté par les figures 4 et 5, chaque fente 8-2 présente, en coupe transversale et préalablement à l'insertion du chemisage 6 dans le tube 4, une forme de trapèze avec une ouverture externe 10-2 présentant une largeur d plus importante que celle d' de l'ouverture interne 14-2.

Une fois le chemisage inséré à l'intérieur du tube (figure 5) ou avec le gonflement du liner en service, les diamètres interne et externe du chemisage rétrécissent, provoquant une fermeture au moins partielle - voire totale - du côté de la face interne 6a du chemisage (sur l'exemple de la figure 5, la fente 8-2 ainsi déformée présente, en coupe transversale, une forme triangulaire).

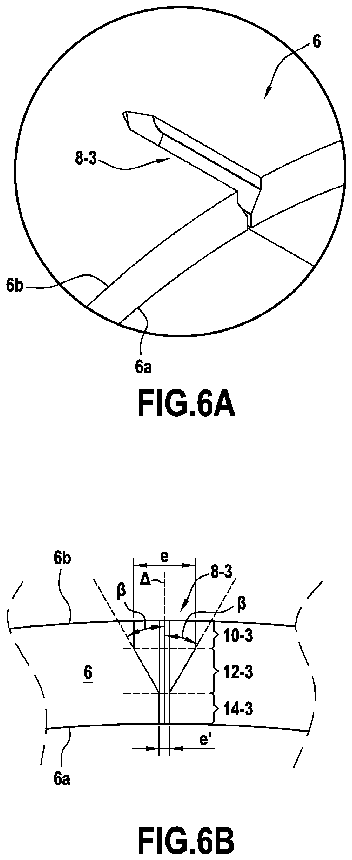

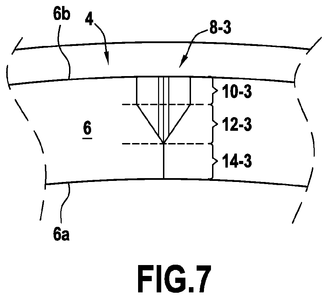

Dans le troisième mode de réalisation représenté par les figures 6A, 6B et 7, chaque fente 8-3 présente, en coupe transversale et préalablement à l'insertion du chemisage 6 dans le tube 4, une ouverture externe 10-3 et une ouverture interne 14-3 ayant chacune une forme rectangulaire avec l'ouverture externe de largeur e plus grande que celle e' de l'ouverture interne, et une gorge 12-3 ayant une forme de trapèze isocèle.

Une fois le chemisage inséré à l'intérieur du tube (figure 7), les diamètres interne et externe du chemisage rétrécissent ce qui provoque une fermeture au moins partielle - voire totale - du côté de la face interne 6a du chemisage (sur l'exemple de la figure 7, la fente est totalement fermée du côté de la face interne).

De préférence, comme représenté sur la figure 6B, l'ouverture externe 10-3 et l'ouverture interne 14-3 de chaque fente 8-3 sont alignées selon la médiatrice Δ de la gorge 12-3, et les deux côtés non parallèles de celles-ci forment, en coupe transversale, un angle β compris entre 20° et 45° avec la médiatrice Δ.

Un tel angle β compris entre 20° et 45° permet de lisser le profil de la fente et de limiter les effets de concentration des contraintes dans les fentes et aux extrémités de celles-ci.

Bien entendu, d'autres dimensions peuvent être envisagées en fonction des dimensions, de l'épaisseur, du matériau et des exigences spécifiques de l'application.

A titre d'exemple, dans la position au repos du chemisage, chaque fente 8-3 mesure environ 50mm de longueur et présente une ouverture externe 10-3 de comprise entre 1 et 10mm et une ouverture interne 14-3 comprise entre 0,2 et 4mm.

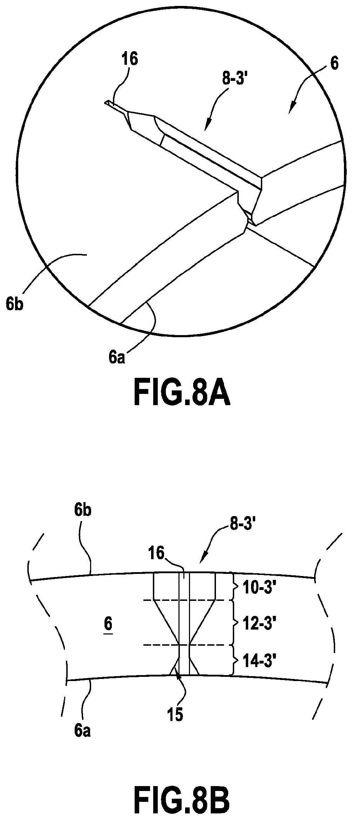

Les figures 8A et 8B sont des vues respectivement en perspective et en coupe transversale d'une fente 8-3' du chemisage d'une conduite selon une variante du troisième mode de réalisation de l'invention préalablement à l'insertion du chemisage dans le tube.

Dans cette variante de réalisation, chaque fente 8-3' présente, en coupe transversale et préalablement à l'insertion du chemisage dans le tube, une ouverture interne 10-3' qui débouche au niveau de la face interne 6a du chemisage par une forme évasée 15.

Cette conception de fente à forme évasée permet de favoriser l'ouverture du côté interne du chemisage lors de l'initiation du flambage de celle-ci pour faciliter l'évacuation des gaz de perméation.

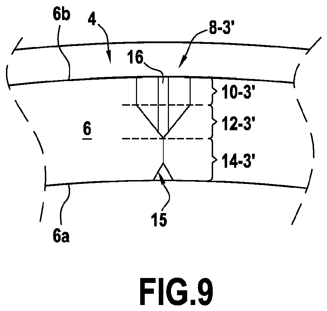

Une fois le chemisage inséré à l'intérieur du tube (figure 9) ou avec le gonflement, les diamètres interne et externe du chemisage rétrécissent ce qui provoque une fermeture au moins partielle - voire totale - entre la face interne et la face externe du chemisage le long de sa profondeur (sur l'exemple de la figure 9, la fente est totalement fermée au niveau de la partie non évasée de son ouverture interne 14-3').

Par ailleurs, comme représenté notamment sur la figure 8A en perspective, chaque fente 8-3 peut déboucher à chaque extrémité longitudinale au niveau d'une rainure d'usinage 16, cette dernière étant la conséquence d'un usinage de la fente par une fraiseuse spécifique en forme d'entonnoir. La présence d'une telle rainure peut être évitée au moyen d'une séquence d'usinage spécifique en deux étapes (au lieu d'une seule).

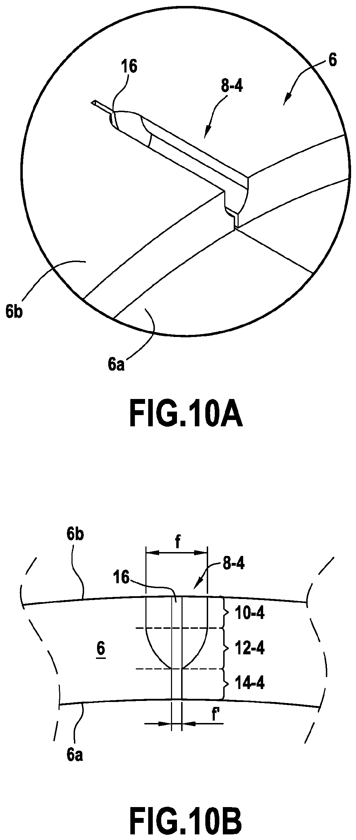

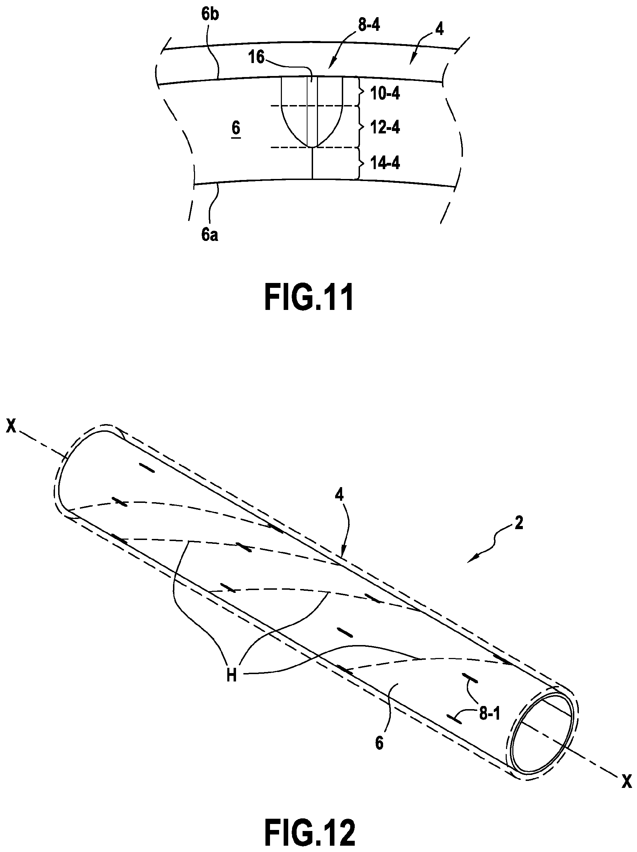

Dans un quatrième mode de réalisation représenté sur les figures 10A, 10B et 11, chaque fente 8-4 présente, en coupe transversale et préalablement à l'insertion du chemisage 6 dans le tube 4, une ouverture externe 10-4 et une ouverture interne 14-3 ayant chacune une forme rectangulaire avec l'ouverture externe ayant une largeur f plus grande que la largeur f' de l'ouverture interne, et une gorge 12-4 ayant une forme de U.

Par rapport au troisième mode de réalisation, cette forme spécifique des fentes permet de limiter les concentrations de stress au niveau des jonctions entre la gorge 12-4 et les ouvertures externe 10-4 et interne 14-4.

Une fois le chemisage inséré à l'intérieur du tube (figure 11) ou avec le gonflement, les diamètres interne et externe du chemisage rétrécissent ce qui provoque une fermeture au moins partielle - voire totale - du côté de la face interne 6a du chemisage (sur l'exemple de la figure 11, la fente est totalement fermée du côté de la face interne).

On notera sur la figure 10A la présence d'une rainure d'usinage 16 à chaque extrémité longitudinale des fentes comme celle décrite en liaison avec la figure 8A (cette rainure peut être peut être évitée au moyen d'une séquence d'usinage spécifique en deux étapes).

Quel que soit le mode de réalisation envisagé pour les fentes, celles-ci s'étendent chacune dans le sens de leur longueur parallèlement à l'axe longitudinal X-X du tube 4.

Par ailleurs, comme représenté sur la figure 1, les fentes peuvent être distribuées sur la surface du chemisage de sorte à être alignées le long d'une pluralité d'axes Y parallèles à l'axe longitudinal X-X du tube. Cette distribution permet de réduire les risques d'endommagement du chemisage pendant le processus d'insertion dans le tube et pendant la durée de vie de la conduite en cas de mouvement/déplacement de celle-ci.

Alternativement, comme représenté sur la figure 12, les fentes peuvent être distribuées sur la surface du chemisage 6 de sorte à être alignées le long d'une pluralité d'hélices H centrées chacune sur l'axe longitudinal X-X du tube 4. Par exemple, ces hélices H peuvent former chacune un angle de 45° avec l'axe longitudinal X-X. Cette distribution permet d'optimiser la répartition géométrique des fentes et donc l'évacuation du gaz de perméation tout en maintenant réduit les risques d'endommagement du chemisage.

D'autres profils de distribution des fentes peuvent être envisagés en fonction des exigences spécifiques des applications (telles que fluide transporté, pression de service de la conduite et taux de dépressurisation autorisés, dimensions de la conduite, etc...). L'objectif reste de s'assurer que la pression différentielle entre l'espace annulaire et l'intérieur de la conduite est maintenue en dessous de la pression d'effondrement.

Par ailleurs, et quel que soit le mode de réalisation envisagé pour les fentes, le chemisage 6 peut comprendre en outre une pluralité de canaux (non représentés sur les figures) communiquant chacun avec au moins une fente, ces canaux étant débouchant du côté de la face externe du chemisage et non débouchant du côté de la face interne du chemisage. De tels canaux permettent d'assurer un drainage du gaz de perméation vers les fentes.

Avec une très bonne connectivité axiale (c'est-à-dire capacité du gaz de perméation à se déplacer sous le chemisage), les pas entre le profil des fentes et la distribution angulaire de celles-ci pourraient être augmentés afin d'avoir significativement moins de fentes que celles montrées sur les figures 1 et 12.

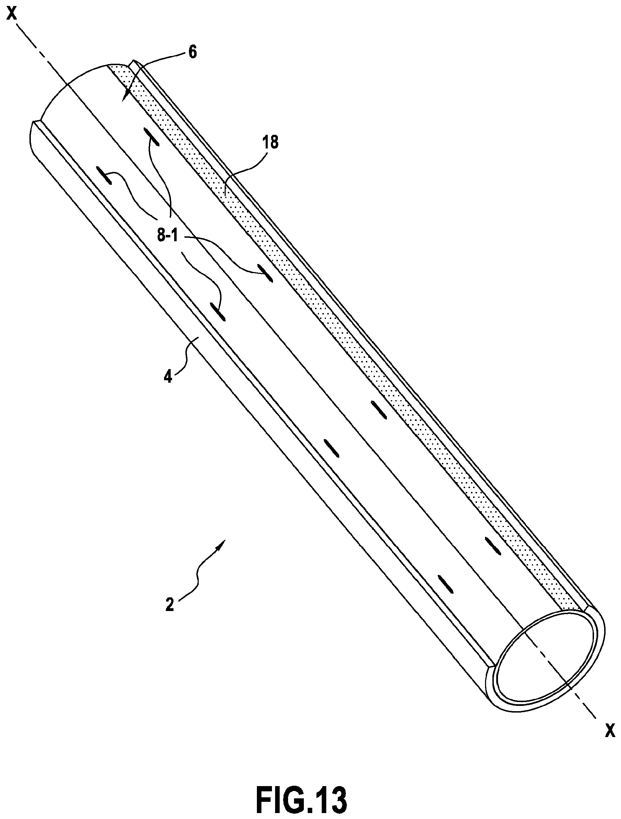

Selon une disposition avantageuse de l'invention représentée sur la figure 13, la conduite 2 comprend en outre un revêtement anti-corrosion fin 18 qui est appliqué sur la face interne du tube préalablement à l'insertion de la chemise 6. La présence du revêtement anti-corrosion permet une protection supplémentaire contre la corrosion de la conduite acier, par le revêtement et le chemisage, ledit revêtement étant lui-même protégé de l'abrasion et des rayures par la présence du chemisage.

## Revendications

1. Conduite (2) pour le transport de fluides, comprenant un tube (4) en acier destiné à recevoir un écoulement de fluides à transporter, et un chemisage (6) annulaire de protection contre la corrosion et/ou l'abrasion réalisé en matériau polymère et inséré à l'intérieur du tube, le chemisage (6) comprenant une pluralité de fentes (8-1 ; 8-2 ; 8-3 ; 8-3' ; 8-4) qui s'étendent dans le sens de leur longueur parallèlement à un axe longitudinal (X-X) du tube, **caractérisée en ce que** les fentes sont traversantes entre une face interne (6a) et une face externe (6b) du chemisage, chaque fente étant ouverte du côté de la face interne du chemisage préalablement à l'insertion du chemisage dans le tube, et au moins partiellement fermée entre la face interne et la face externe du chemisage le long de sa profondeur une fois le chemisage inséré dans le tube.

2. Conduite selon la revendication 1, dans laquelle chaque fente (8-1 ; 8-2 ; 8-3 ; 8-3' ; 8-4) présente, en coupe transversale et préalablement à l'insertion du chemisage dans le tube, une ouverture externe (10-1 ; 10-2 ; 10-3 ; 10-3' ; 10-4) au niveau de la face externe (6b) du chemisage qui communique par l'intermédiaire d'une gorge (12-1 ; 12-2 ; 12-3 ; 12-3' ; 12-4) avec une ouverture interne (14-1 ; 14-2 ; 14-3 ; 14-3' ; 14-4) au niveau de la face interne (6a) du chemisage.

3. Conduite selon la revendication 2, dans laquelle chaque fente (8-1) présente, en coupe transversale et préalablement à l'insertion du chemisage dans le tube, une forme de rectangle avec une ouverture externe (10-1) ayant la même largeur que l'ouverture interne (14-1).

4. Conduite selon la revendication 2, dans laquelle chaque fente (8-2) présente, en coupe transversale et préalablement à l'insertion du chemisage dans le tube, une forme de trapèze avec une ouverture externe (10-2) de plus grande largeur que l'ouverture interne (14-2).

5. Conduite selon la revendication 2, dans laquelle chaque fente (8-3 ; 8-3') présente, en coupe transversale et préalablement à l'insertion du chemisage dans le tube, une ouverture externe (10-3 ; 10-3') et une ouverture interne (14-3 ; 14-3') de forme rectangulaire avec l'ouverture externe de plus grande largeur que l'ouverture interne, et une gorge (12-3 ; 12-3') ayant une forme de trapèze isocèle.

6. Conduite selon la revendication 5, dans laquelle les ouvertures externe et interne de chaque fente (8-3 ; 8-3') sont alignées selon la médiatrice (Δ) de la gorge, les deux côtés non parallèles de la gorge formant, en coupe transversale, un angle (β) compris entre 20° et 45° avec la médiatrice.

7. Conduite selon la revendication 6, dans laquelle, préalablement à l'insertion du chemisage dans le tube, l'ouverture externe de chaque fente (8-3 ; 8-3') mesure entre 1 et 10mm et l'ouverture interne de chaque fente mesure entre 0,2 et 4mm.

8. Conduite selon la revendication 2, dans laquelle chaque fente (8-4) présente, en coupe transversale et préalablement à l'insertion du chemisage dans le tube, une ouverture externe (10-4) et une ouverture interne (14-4) de forme rectangulaire avec l'ouverture externe de plus grande largeur que l'ouverture interne, et une gorge (12-4) ayant une forme de U.

9. Conduite selon l'une quelconque des revendications 5 à 8, dans laquelle, en coupe transversale et préalablement à l'insertion du chemisage dans le tube, l'ouverture interne (14-3 ; 14-4) de chaque fente débouche au niveau de la face interne du chemisage par une forme évasée (15).

10. Conduite selon l'une quelconque des revendications 1 à 9, dans laquelle les fentes sont alignées le long d'une pluralité d'axes (Y-Y) parallèles à l'axe longitudinal (X-X) du tube.

11. Conduite selon l'une quelconque des revendications 1 à 9, dans laquelle les fentes sont alignées le long d'une pluralité d'hélices (H) centrées sur l'axe longitudinal (X-X) du tube.

12. Conduite selon l'une quelconque des revendications 1 à 11, dans laquelle le chemisage comprend en outre une pluralité de canaux communiquant chacun avec au moins une fente, les canaux étant débouchant du côté de la face externe du chemisage et non débouchant du côté de la face interne du chemisage.

13. Conduite selon l'une quelconque des revendications 1 à 11, comprenant en outre un revêtement anti-corrosion (18) appliqué sur une face interne du tube (4) préalablement à l'insertion de la chemise.

## Patentansprüche

1. Leitung (2) für den Transport von Fluiden, umfassend ein Stahlrohr (4), das dazu bestimmt ist, einen zu transportierenden Fluidstrom aufzunehmen, und eine ringförmige Auskleidung (6) zum Schutz vor Korrosion und/oder Abrieb, die aus einem Polymermaterial hergestellt und in das Innere des Rohrs eingesetzt ist, die Auskleidung (6) umfassend eine Vielzahl von Schlitzen (8-1; 8-2; 8-3; 8-3'; 8-4), die sich in Richtung ihrer Länge parallel zu einer Längsachse (X-X) des Rohrs erstrecken, **dadurch gekennzeichnet, dass** die Schlitze zwischen einer Innenfläche (6a) und einer Außenfläche (6b) der Auskleidung durchgehend sind, wobei jeder Schlitz auf der Seite der Innenfläche der Auskleidung vor dem Einsetzen der Auskleidung in das Rohr offen ist und zumindest teilweise zwischen der Innenfläche und der Außenfläche der Auskleidung entlang ihrer Tiefe geschlossen ist, nachdem die Auskleidung in das Rohr eingesetzt wurde.

2. Leitung nach Anspruch 1, wobei jeder Schlitz (8-1; 8-2; 8-3; 8-3'; 8-4) im Querschnitt und vor dem Einsetzen der Auskleidung in das Rohr eine äußere Öffnung (10-1; 10-2; 10-3; 10-3'; 10-4) an der Außenfläche (6b) der Auskleidung aufweist, die über eine Nut (12-1; 12-2; 12-3; 12-3'; 12-4) mit einer inneren Öffnung (14-1; 14-2; 14-3; 14-3'; 14-4) an der Innenfläche (6a) der Auskleidung in Verbindung ist.

3. Leitung nach Anspruch 2, wobei jeder Schlitz (8-1) im Querschnitt und vor dem Einsetzen der Auskleidung in das Rohr eine rechteckige Form mit einer äußeren Öffnung (10-1) aufweist, die die gleiche Breite wie die innere Öffnung (14-1) aufweist.

4. Leitung nach Anspruch 2, wobei jeder Schlitz (8-2) im Querschnitt und vor dem Einsetzen der Auskleidung in das Rohr eine Trapezform mit einer äußeren Öffnung (10-2) mit größerer Breite als die innere Öffnung (14-2) aufweist.

5. Leitung nach Anspruch 2, wobei jeder Schlitz (8-3; 8-3') im Querschnitt und vor dem Einsetzen der Auskleidung in das Rohr eine äußere Öffnung (10-3; 10-3') und eine innere Öffnung (14-3; 14-3') mit rechteckiger Form, wobei die äußere Öffnung eine größere Breite als die innere Öffnung aufweist, und eine Nut (12-3; 12-3'), die die Form eines gleichschenkligen Trapezes aufweist, aufweist.

6. Leitung nach Anspruch 5, wobei die äußere und die innere Öffnung von jedem Schlitz (8-3; 8-3') entlang der Mittelsenkrechten (Δ) der Nut ausgerichtet sind, wobei die zwei nicht parallelen Seiten der Nut im Querschnitt einen Winkel (β) zwischen 20° und 45° mit der Mittelsenkrechten bilden.

7. Leitung nach Anspruch 6, wobei vor dem Einsetzen der Auskleidung in das Rohr die äußere Öffnung von jedem Schlitz (8-3; 8-3') zwischen 1 und 10 mm misst und die innere Öffnung von jedem Schlitz zwischen 0,2 und 4 mm misst.

8. Leitung nach Anspruch 2, wobei jeder Schlitz (8-4) im Querschnitt und vor dem Einsetzen der Auskleidung in das Rohr eine äußere Öffnung (10-4) und eine innere Öffnung (14-4) mit rechteckiger Form, wobei die äußere Öffnung eine größere Breite als die innere Öffnung aufweist, und eine Nut (12-4), die die Form eines U aufweist, aufweist.

9. Leitung nach einem der Ansprüche 5 bis 8, wobei im Querschnitt und vor dem Einsetzen der Auskleidung in das Rohr die innere Öffnung (14-3; 14-4) von jedem Schlitz an der Innenfläche der Auskleidung in einer aufgeweiteten Form (15) mündet.

10. Leitung nach einem der Ansprüche 1 bis 9, wobei die Schlitze entlang einer Vielzahl von Achsen (Y-Y) parallel zu der Längsachse (X-X) des Rohrs ausgerichtet sind.

11. Leitung nach einem der Ansprüche 1 bis 9, wobei die Schlitze entlang einer Vielzahl von Spiralen (H) ausgerichtet sind, die auf der Längsachse (X-X) des Rohrs zentriert sind.

12. Leitung nach einem der Ansprüche 1 bis 11, wobei die Auskleidung ferner eine Vielzahl von Kanälen umfasst, die jeweils mit mindestens einem Schlitz in Verbindung sind, wobei die Kanäle auf der Seite der Außenfläche der Auskleidung durchgängig sind und auf der Seite der Innenfläche der Auskleidung nicht durchgehend sind.

13. Leitung nach einem der Ansprüche 1 bis 11, ferner umfassend eine Korrosionsschutzbeschichtung (18), die vor dem Einsetzen der Auskleidung auf eine Innenfläche des Rohrs (4) aufgebracht wird.

## Claims

1. A pipeline (2) for the transport of fluids, comprising
a steel tube (4) intended to receive a flow of fluids to be transported, and an annular lining (6) for protection against corrosion and/or abrasion made of polymer material, and inserted inside the tube, the lining comprising a plurality of slots (8-1; 8-2; 8-3; 8-3'; 8-4) which extend in the direction of their length parallel to a longitudinal axis (X-X) of the tube,
**characterized in that** the slots pass all the way from an inner face (6a) to an outer face (6b) of the lining, each slot being open on the side of the inner face of the lining prior to the insertion of the lining into the tube, and at least partially closed between the inner face and the outer face of the lining along its depth once the lining is inserted into the tube.

2. The pipeline according to claim 1, wherein each slot (8-1; 8-2; 8-3; 8-3'; 8-4) has, in cross section and prior to the insertion of the lining into the tube, an outer opening (10-1; 10-2; 10-3; 10-3'; 10-4) at the level of the outer face (6b) of the lining which communicates via a groove (12-1; 12-2; 12-3; 12-3'; 12-4) with an inner opening (14-1; 14-2; 14-3; 14-3'; 14-4) at the level of the inner face (6a) of the lining.

3. The pipeline according to claim 2, wherein each slot (8-1) has, in cross section and prior to the insertion of the lining into the tube, a rectangular shape with an outer opening (10-1) having the same width as the inner opening (14-1).

4. The pipeline according to claim 2, wherein each slot (8-2) has, in cross section and prior to the insertion of the lining into the tube, a trapezoid shape with an outer opening (10-2) of greater width than the inner opening (14-2).

5. The pipeline according to claim 2, wherein each slot (8-3; 8-3') has, in cross section and prior to the insertion of the lining into the tube, an outer opening (10-3; 10 -3') and an inner opening (14-3; 14-3') of rectangular shape with the outer opening of greater width than the inner opening, and a groove (12-3; 12-3') having the shape of an isosceles trapezoid.

6. The pipeline according to claim 5, wherein the outer and inner openings of each slot (8-3; 8-3') are aligned along the perpendicular bisector (Δ) of the groove, the two non-parallel sides of the groove forming, in cross section, an angle (β) comprised between 20° and 45° with the perpendicular bisector.

7. The pipeline according to claim 6, wherein, prior to the insertion of the lining into the tube, the outer opening of each slot (8-3; 8-3') measures between 1 and 10mm and the inner opening of each slot measures between 0.2 and 4 mm.

8. The pipeline according to claim 2, wherein each slot (8-4) has, in cross section and prior to the insertion of the lining into the tube, an outer opening (10-4) and an inner opening (14-4) of rectangular shape with the outer opening of greater width than the inner opening, and a groove (12-4) having a U shape.

9. The pipeline according to any one of claims 5 to 8, wherein, in cross section and prior to the insertion of the lining into the tube, the inner opening (14-3; 14-4) of each slot opens out at the level of the inner face of the lining through a flared shape (15).

10. The pipeline according to any one of claims 1 to 9, wherein the slots are aligned along a plurality of axes (Y-Y) parallel to the longitudinal axis (X-X) of the tube.

11. The pipeline according to any one of claims 1 to 9, wherein the slots are aligned along a plurality of helices (H) centered on the longitudinal axis (X-X) of the tube.

12. The pipeline according to any one of claims 1 to 11, wherein the lining further comprises a plurality of channels each communicating with at least one slot, the channels opening out onto the side of the outer face of the lining and not opening out onto the side of the inner face of the lining.

13. The pipeline according to any one of claims 1 to 11, further comprising an anti-corrosion coating (18) applied on an inner face of the tube (4) prior to the insertion of the liner.
